# EUROPEAN PATENT APPLICATION

(11) **EP 0 991 304 A2**
(43) Date of publication of application: **05.04.2000**
(21) Application number: 99307705.6
(22) Date of filing: 29.09.1999
(51) Int. Cl.: H05B 41/38

(54) **Dimmer circuit for a LED**

(30) Priority: 02.10.1998 GB 9821343
(71) Applicant: TEC Electrical Components Limited, Enfield, West Yorkshire EN1 1UZ (GB)
(72) Inventor: Moore, Colin, Kirkham, Lancashire PR4 2ZQ (GB)
(74) Representative: Robinson, Ian Michael

(57) **Abstract**

A dimmer circuit for use with a light emitting diode (or equivalent) having a substantially linear current-brightness response characteristic (10), wherein the dimmer circuit changes the linear response characteristic (20) above a changeover point (c) in order to emulate the non-linear response characteristic of a filament lamp.

## Description

The present invention relates in general to a dimmer circuit for varying the light output characteristics of a light emitting element such as a LED.

It is known to alter the light output level (brightness) of an incandescent filament lamp by varying the current passing through the lamp. Typically, the current is altered by placing a variable resistor in series with the filament lamp and coupling the circuit to a constant voltage source. However, filament lamps are fragile, expensive and have a relatively short life span. Also, filament lamps are inefficient and produce a relatively large amount of radiated heat. Therefore, it is desired to use semiconductor light emitting devices such as LEDs instead of filament lamps.

One particular application, which will be discussed by way of example, relates to illuminated displays for use in aircraft. It is desired to use LEDs alongside and in place of conventional filament lamps. However, a problem arises in that the brightness control arrangement using a typical series variable resistor arrangement results in a substantially linear change in light output for LEDs but in a substantially non-linear response for filament lamps. In a situation such as an aircraft cockpit, it is important that display lights should always appear equally bright whatever level of illumination is set, so as to avoid any possible confusion or concern from the user such as aircraft crew.

It is an aim of at least preferred embodiments of the present invention to provide a dimmer circuit suitable for light generating means such as LEDs that have a substantially linear current-brightness response characteristic, said dimmer circuit for emulating the non-linear response of a filament lamp.

According to the present invention there is provided a dimmer circuit for use with a light generating means having a substantially linear current-brightness response characteristic, characterised in that the dimmer circuit applies a first predetermined linear response characteristic in a first current range, and applies a second predetermined response characteristic in a second current range.

Preferably, said circuit comprises control means for determining the current flow, in use, through the light generating means. Said current flow is preferably provided according to a first linear characteristic up to said changeover point, and a second linear characteristic above said changeover point.

Preferably, said control circuit comprises a resistor in series with said light generation means and bypass means in parallel with said series resistor.

Preferably, said bypass means provides a low-resistance bypass path around said series resistor above, or alternatively below, said changeover point. Suitably, said bypass means is a Zener diode.

The light generating means preferably comprises one or more LEDs. A suitable arrangement of light generating means may be provided, for control by the dimming circuit.

Preferably, a third linear response is provided above a second changeover point. Further changeover points may be provided. The number of changeover points and linear characteristics is preferably selectable.

Preferably, the linear characteristics and changeover point are selected so as to emulate a non-linear filament lamp. Ideally, the changeover point lies close to the response of a filament lamp such that the first linear response approximates a first part of the non-linear filament lamp response, and the second linear response aligns with a second portion of the filament lamp response. This may be extended to cover subsequent linear responses, where available.

Preferably, the response is that shown by a plot of light output measured in, for example, candela per metre squared (cd/m²) against voltage or current.

The dimmer circuit is preferably separate from the light generating means. Alternatively, the dimmer circuit is integrated with the light generating means.

Preferably, the dimmer circuit and the light generating means are integrated within a single display housing. Preferably, the dimmer circuit, the light generating means or the display housing are suitable for use in an aircraft display.

For a better understanding of the invention, and to show how embodiments of the same may be carried into effect, reference will now be made, by way of example, to the accompanying diagrammatic drawings, in which:
Figures 1 to 3 are graphs showing light output characteristics; and
Figure 4 is a dimmer circuit according to a preferred embodiment of the present invention.

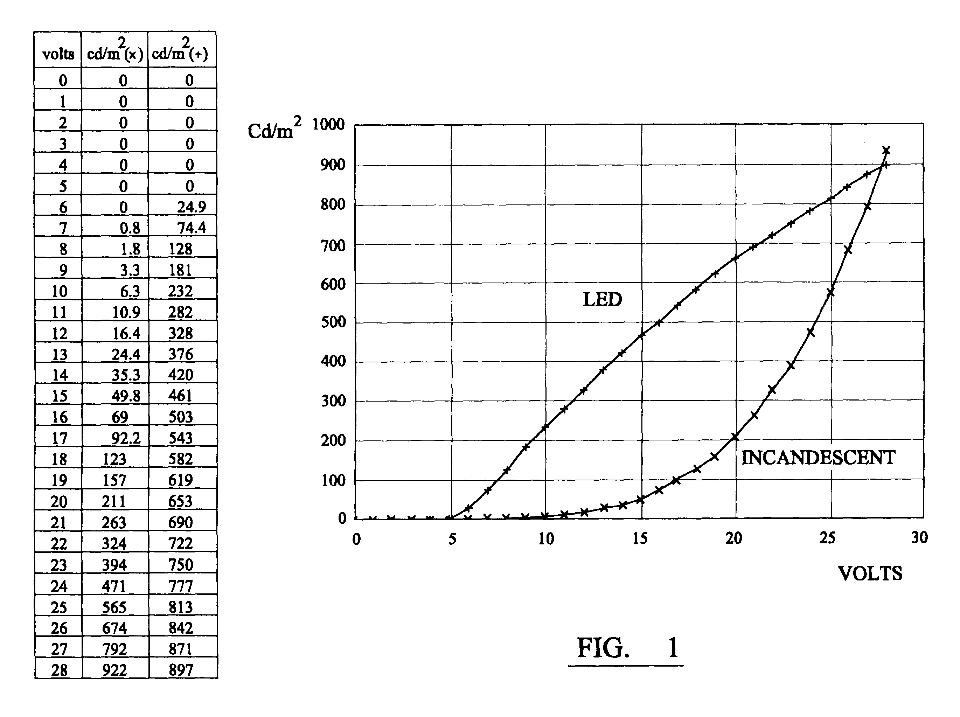

Referring firstly to figure 1, the graph shows the respective light output characteristics of an incandescent lamp and a LED when used with a typical prior art dimmer circuit. This graph shows voltage across the light emitting element along the X-axis. In practice this is commonly effected by using a variable resistor in series with the light emitting element. The Y-axis shows light output measured in candela per metre squared (cd/m²). The points on the graph correspond to the values given in the table shown.

As seen in figure 1, a white LED (with a suitable series resistor) produces a substantially linear characteristic, whereas an incandescent lamp produces a substantially non-linear response. In this example, the input voltage varies from 7V to 28V DC.

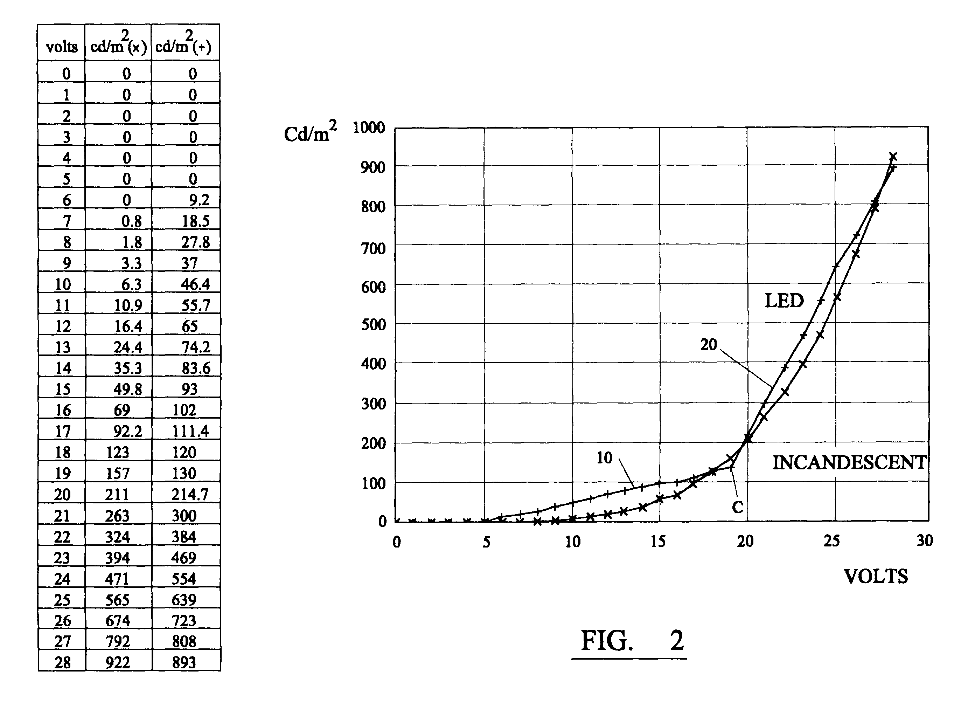

Referring now to figure 2, a graph is shown for a response characteristic according to a first embodiment of the present invention. This graph shows the results obtained in the same circumstances as for figure 1 but including the preferred dimmer circuit for the LED.

As will be seen in figure 2, the dimmer circuit alters the response of the LED to provide a first linear characteristic 10 up to a predetermined changeover point C and a second, steeper, characteristic 20 above the changeover point C. In this way, the two linear responses of the LED provide a first order approximation of the non-linear incandescent response.

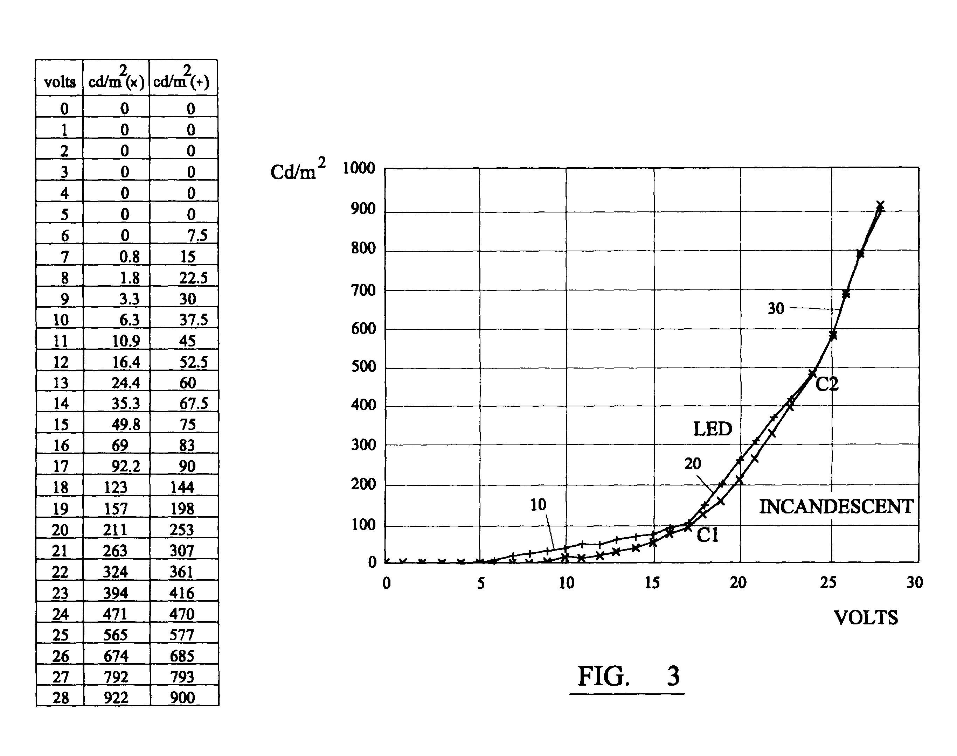

Referring now to figure 3, the graph for a second preferred embodiment is shown. Here, two changeover points C1 and C2 are provided resulting in three linear characteristics 10, 20 and 30 giving a second-order approximation of the non-linear incandescent response curve.

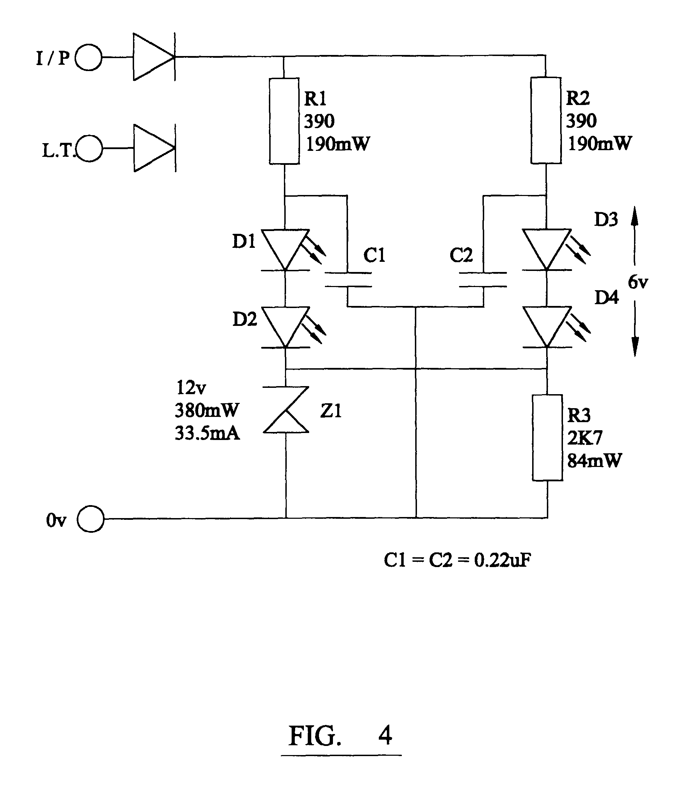

Referring to figure 4, a preferred circuit for achieving a first-order response is shown.

In the preferred embodiment of figure 4, it is desired to simultaneously power four light emitting diodes D1, D2, D3 and D4. Conveniently, power input I/P is provided to LEDs D1 and D2 through resistor R1 and to LEDs D3 and D4 through resistor R2 of equivalent value to R1. During a first stage represented by a response 10, current through diodes D1-D4 is limited by resistor R3. However, as the input I/P increases above a predetermined changeover point C, resistor R3 is bypassed by, in this example, a zener diode Z1. This leaves only resistors R1 and R2 to determine the second stage corresponding to response characteristic 20 of figure 2. The changeover point C in this example is a little over 19V.

The circuit of figure 4 can be adapted as will be apparent to the skilled person to provide the second-order response shown in figure 3, or a higher-order response if desired. Suitably, another resistor is provided in parallel with another zener diode.

Conveniently, the dimmer circuit and diodes D1-D4 are mounted on a single PCB within a suitable display housing ideally formed as an integral plug-in unit.

Capacitors C1 and C2 act to smooth transients and spikes in the DC electrical supply as will be familiar to the skilled person.

The dimmer circuit preferably includes a lamp test facility to show that LEDs D1-D4 are functioning correctly. Multiple LEDs D1-D4 are provided in the preferred display housing to allow for redundancy should one or more of the LEDs fail.

Referring again to figure 2 of the accompanying drawings, a visual test of the dimming circuit shown in figure 4 with four LEDs side by side with an existing incandescent indicator over the desired input range 7 volts to 28 volts gave a matching characteristic that was acceptable to the human eye. Therefore, for cost and simplicity, a single order response is preferred.

The circuit of figure 4 is merely one example and other circuits will be apparent to the skilled person. For example, the same circuit lay out will be equally appropriate for other LED colours, with the component values altered accordingly.

The dimming circuit according to the present invention provides a simple, convenient and low-cost arrangement that allows LEDs and other semi-conductor light generating elements to be used alongside and in place of conventional filament lamp indicators whilst providing corresponding light output characteristics.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A dimmer circuit for use with a light generating means having a substantially linear current-brightness response characteristic, characterised in that the dimmer circuit applies a first predetermined linear response characteristic (10) in a first current range, and applies a second predetermined response characteristic (20) in a second current range.

2. A dimmer circuit as claimed in claim 1, wherein the first response characteristic (10) and the second response characteristic (20) are arranged so that the dimmer circuit emulates a non-linear response characteristic of a filament lamp.

3. A dimmer circuit as claimed in claim 1 or 2, comprising control means for determining the current flow in use through the light generating means.

4. A dimmer circuit as claimed in claim 3, wherein the control means comprises a resistance means (R₃) for use in series with the light generation means, and a bypass means (Z₁) for providing a low-resistance bypass path around said resistance means.

5. A dimmer circuit as claimed in any of claims 1 to 4, wherein the first range is defined up to a changeover point (c), and the second range is defined above the changeover point (c).

6. A dimmer circuit as claimed in any of claims 1 to 5, wherein the dimmer circuit operatively provides a first resistance value (R₁,R₂,R₃) in series with the light generation means over the first range, and provides a second resistance value in (R₁,R₂,Z₁) series with the light generation means over the second range, the second resistance value being lower than the first resistance value.

7. A dimmer circuit as claimed in claim 4, wherein the bypass means comprises a zener diode (Z₁) arranged to be reverse-biased as voltage difference across the resistance means increases.

8. A dimmer circuit as claimed in any of claims 1 to 7, comprising first resistance means (R₁,R₂) and second resistance means (R₃) coupled in series to the light generation means; and bypass means arranged to bypass one of the first or second resistance means such that when voltage difference across the dimmer circuit is above a predetermined level the bypass means (Z₁) provides a low resistance bypass path around the first or second resistance means, respectively.

9. A lighting unit for use in an aircraft display, comprising light generation means including one or more light emitting diodes (D₁-D₄) having a substantially linear current-brightness response characteristic; and a dimmer circuit comprising resistance means (R₃) arranged in series with the light generation means, and bypass means (Z₁) providing a low-resistance bypass path around the resistance means when voltage difference across the dimmer circuit reaches a predetermined changeover point.

10. A method for dimming a light generation unit having a substantially linear current-brightness characteristic to approximate the non-linear response of a filament lamp, comprising the steps of a applying a first resistance value in series with the light generation unit within a first predetermined voltage range; and applying a second resistance value different from the first value when in a second predetermined voltage range.
